# EUROPÄISCHE PATENTANMELDUNG

(11) **EP 1 632 791 A2**
(43) Veröffentlichungstag der Anmeldung: **08.03.2006**
(21) Anmeldenummer: 05018757.4
(22) Anmeldetag: 30.08.2005
(51) Int. Cl.: G01S 17/89

(54) **Nachtsichtsystem für ein Kraftfahrzeug**

(30) Priorität: 04.09.2004 DE 102004042816
(71) Anmelder: AUDI AKTIENGESELLSCHAFT, 85045 Ingolstadt (DE)
(72) Erfinder: Taner, Anil, 85057 Ingolstadt (DE); Riedel, Helmut, Dr., 86697 Oberhausen (DE); Grünleitner, Holger, Dr., 85049 Ingolstadt (DE)
(74) Vertreter: Thielmann, Frank

(57) **Zusammenfassung**

Nachtsichtsystem für ein Kraftfahrzeug, umfassend wenigstens eine Nahinfrarot-Pulslichtquelle, wenigstens eine Bildaufnahmeeinrichtung, deren Belichtungszeit mit dem ausgesandten Lichtpuls der Pulslichtquelle synchronisiert ist, und eine Datenverarbeitungseinrichtung, wobei die Datenverarbeitungseinrichtung zur Erkennung von Blendung durch Fremdlichtquellen mittels Analyse der Intensität wenigstens eines mit der Bildaufnahmeeinrichtung aufgenommen Bildes in Abhängigkeit eines ein Maß für das Vorliegen von Blendung darstellenden Schwellwerts der Intensität ausgebildet ist.

## Beschreibung

Die Erfindung betrifft ein Nachtsichtsystem für ein Kraftfahrzeug, umfassend wenigstens eine Nahinfrarot-Pulslichtquelle, wenigstens eine Bildaufnahmeeinrichtung, deren Belichtungszeit mit dem ausgesandten Lichtpuls der Pulslichtquelle synchronisiert ist, und eine Datenverarbeitungseinrichtung.

Aktive Nachtsichtsysteme für Kraftfahrzeuge verfügen über Kameras, die sowohl im sichtbaren Spektralbereich als auch im nahen Infrarot empfindlich sind. Dabei wird mit einer Infrarotlichtquelle die Szene im Aufnahmebereich der Kamera zusätzlich aufgehellt. Diese Aufhellung, die vom menschlichen Auge nicht wahrgenommen wird, führt zu einer deutlich verbesserten Bildqualität mit höherer Detailauflösung.

Ein aktives Nachtsichtsystem arbeitet dann am effizientesten, wenn die Belichtungszeit der Nahinfrarot-Kamera mit dem ausgesandten Lichtpuls synchronisiert ist, so dass die gesamte verfügbare Lichtenergie zur Szenenausleuchtung verwendet werden kann. Die Synchronisation wird mittels Kameras ereicht, die neben einem Synchronisationsanschluss über einen sogenannten "global shutter" verfügen, wobei sämtliche Pixel der Kamera zeitlich belichtet werden.

Da die Nahinfrarot-Lichtquellen wie auch ein konventionelles Fernlicht eine Ausleuchtcharakteristik mit großer Leuchtweite aufweisen, besteht insbesondere dann, wenn sich zwei Fahrzeuge begegnen, die beide über ein aktives Nachtsichtsystem verfügen, die Gefahr einer Blendung. Die Gefahr der Blendung ist insbesondere dann hoch, wenn das entgegenkommende Fahrzeug über eine statisch leuchtende Halogenquelle verfügt, die die Szene zeitlich unverändert ausleuchtet. Aber auch bei Pulslichtquellen kann eine Blendung auftreten, wenn sich die Lichtpulse der beiden Fahrzeuge zeitlich überlappen. Die dem Fahrer z.B. an einem fahrzeugseitigen Display dargestellten Bilder des Nachtsichtsystems lassen im Falle einer starken Blendung keine Rückschlüsse auf bestehende Gefahren zu, das Nachtsichtsystem kann, insbesondere angesichts der zunehmenden Verbreitung von Nachtsichtsystemen, nur sehr eingeschränkt ausgenutzt werden.

Der Erfindung liegt damit die Aufgabe zugrunde, ein Nachsichtsystem der eingangs genannten Art anzugeben, das diesbezüglich verbessert ist.

Zur Lösung dieser Aufgabe ist beim erfindungsgemäßen Nachtsichtsystem vorgesehen, dass die Datenverarbeitungseinrichtung zur Erkennung von Blendung durch Fremdlichtquellen mittels Analyse der Intensität wenigstens eines mit der Bildaufnahmeeinrichtung aufgenommenen Bildes in Abhängigkeit eines ein Maß für das Vorliegen von Blendung darstellenden Schwellwerts der Intensität ausgebildet ist.

Die Datenverarbeitungseinrichtung des erfindungsgemäßen Nachtsichtsystems führt zunächst eine Analyse der Intensität eines aufgenommenen Bildes durch. Die Analyse kann mit jedem aufgenommenen Bild erfolgen, alternativ ist es möglich, nur bestimmte Bilder, zum Beispiel jedes zehnte Bild, derart zu analysieren. Zur Analyse wird ein Schwellwert der Intensität herangezogen, der ein Maß für das Vorliegen von Blendung darstellt. Ist dieser Intensitätsschwellwert überschritten, dann liegt eine Blendung durch Fremdlichtquellen vor. So kann mit dem erfindungsgemäßen Nachtsichtsystem eine Blendung zuverlässig erkannt werden, um dann gegebenenfalls Maßnahmen zu ergreifen, um der Blendung entgegenzuwirken und so die Möglichkeiten des Nachtsichtsystems auch bei Einstrahlung durch Fremdlichtquellen optimal ausnutzen zu können.

Erfindungsgemäß kann die Datenverarbeitungseinrichtung zur Analyse der Intensität in Abhängigkeit eines von der maximalen Eigenstrahlung der Pulslichtquelle abhängigen Intensitäts-Schwellwerts ausgebildet sein. Der Schwellwert kann anhand der bekannten Strahlungseigenschaften der Pulslichtquelle vorab fest eingestellt sein, wobei er je nach den Aufnahmeeigenschaften der Bildaufnahmeeinrichtung beispielsweise der maximalen Eigenstrahlung entspricht oder etwas darunter oder darüber liegt. Bei einem Schwellwert unterhalb der maximalen Eigenstrahlung ist berücksichtigt, dass nicht die gesamte Eigenstrahlung reflektiert wird. Je nach System können Schwellwerte zwischen 70 und 130 % der maximalen Eigenstrahlung, gegebenenfalls auch außerhalb dieses Bereichs, sinnvoll sein. Alternativ kann der Schwellwert in Abhängigkeit von den Umfeldbedingungen dynamisch angepasst werden, z.B. unter Berücksichtigung der Reflexionen von Gegenständen, die selbst kein Licht aussenden, wie beispielsweise Straßenpfosten.

Eine Ausgestaltung der Erfindung sieht vor, dass die Datenverarbeitungseinrichtung zur pixelweisen Analyse der Intensität des Bildes, insbesondere durch Analyse der Intensität ausgewählter Bildbereiche, ausgebildet ist. So lässt sich erkennen, ob das Bild insgesamt sehr hell ist oder ob nur in bestimmten ausgewählten Bildbereichen eine hohe Intensität gegeben ist. Ausgewählte Bildbereiche können die sogenannten "Regions of Interest" sein, also Bereiche, deren Darstellung im Bild für die Auswertung entscheidend ist, wie die Fahrbahn im Nahbereich oder die eigene Fahrspur. Mit Hilfe der pixelweisen Analyse können bestimmte Blendungscluster, also Pixelgruppen mit einer besonderen Helligkeit, erkannt werden. Damit lässt sich feststellen, wie relevant ein Blendeffekt für den Informationsgehalt des gesamten Bildes ist.

Erfindungsgemäß kann die Pulslichtquelle zum Betrieb in einem Einzelpulsmodus, in dem in jedem Bildaufnahmetakt ein einziger Lichtpuls ausgesandt wird, und/oder zum Betrieb in einem Pulsfolgenmodus, in dem in jedem Bildaufnahmetakt eine Folge von kurzen Einzelpulsen ausgesandt wird, ausgebildet sein. Durch die Pause zwischen den einzelnen kurzen Pulsen im Pulsfolgenmodus ist die Belichtungsphase bei gleicher Pulsintensität länger, alternativ können auch Pulse mit höheren Intensitäten ausgesendet werden. Beim Pulsfolgenmodus ist die Wahrscheinlichkeit einer Blendung aufgrund der Pausen zwischen der Aussendung der einzelnen Pulsen im Vergleich zum Einzelpulsmodus nochmals verringert, da davon auszugehen ist, dass entgegenkommende Fahrzeuge wenigstens teilweise ebenfalls Einzelpulse oder Pulsfolgen statt einer statischen, ohnehin intensitätsschwächeren Strahlung aussenden.

Vorteilhafterweise ist die Datenverarbeitungseinrichtung bei einem Einzelpulsbetrieb der Pulslichtquelle und/oder bei einem Pulsfolgenbetrieb mit äquidistanten Einzelpulsen zur Regelung des Bildaufnahmebetriebs derart ausgebildet, dass bei erkannter Blendung das Aussenden des Lichtpulses oder der Pulsfolge im folgenden Bildaufnahmetakt zeitverschoben erfolgt. Dadurch besteht die Möglichkeit für das Nachtsichtsystem, über mehrere Bildaufnahmetakte für das Aussenden des eigenen Lichtpulses oder der Pulsfolge einen Zeitschlitz zu suchen, in dem die geringste Überlappung mit den Lichtpulsen anderer Fahrzeuge auftritt.

Bei einem hinreichend großen zeitlichen Abstand der Lichtpulse ist es möglich, dass dazwischen Lichtpulse mehrerer anderer Fahrzeuge liegen. In diesem Fall kann der optimale Einsatzpunkt für den eigenen Lichtpuls so gewählt werden, dass zwar eine kleine Überlappung in Kauf genommen wird, diese aber mit demjenigen Fremdlichtpuls angestrebt wird, der die geringste Energie aufweist. In einem solchen Fall ist es alternativ ebenso möglich, das Fremdlicht gezielt zu nutzen, indem eine Synchronisierung mit dem Fremdlichtpuls angestrebt wird, wobei die eigene Lichtquelle jedoch so anzusteuern ist, dass die reflektierte Intensität nicht zu hoch wird.

Das Verschieben des Einsatzpunktes des Lichtpulses beziehungsweise der Pulsfolge erfolgt im Rahmen eines Regelungssystems, so dass nach einem Bildaufnahmetakt, in dem eine Blendung erkannt wurde, der oder die Pulse zeitverschoben ausgesendet werden, woraufhin im folgenden Bildaufnahmetakt wiederum eine Analyse erfolgt, wonach, falls wieder eine Blendung erkannt wird, eine weitere Verschiebung durchgeführt wird usw.

Eine zweckmäßige Wahl für die Zeitverschiebung liegt im Bereich einer Pulsweite oder Pulsfolgenweite, insbesondere bei einer halben Pulsweite oder Pulsfolgenweite. Die Pulsweiten liegen typischerweise im Bereich von Millisekunden, so dass in dem Fall, dass mehrere Fahrzeuge in einer Verkehrsszene individuell versuchen, ihre Lichtpulse optimal zu positionieren, dasjenige Fahrzeug, das als erstes eine Blendung erkennt, bereits nach wenigen Bildaufnahmetakten seine Lichtpulse optimal positioniert haben wird und sich die anderen Fahrzeuge anschließend in der Reihenfolge ihrer Erkennungsgeschwindigkeit in die Pulsmuster einordnen können. Die Abstufung für das Verschieben des Pulses oder der Pulsfolge muss nicht im Bereich einer Pulsweite liegen, alternativ sind feinere oder grobere Zeitverschiebungen möglich.

Eine Ausgestaltung der Erfindung sieht vor, dass die Pulslichtquelle bei einem Pulsfolgenbetrieb zur statistisch verteilten Aussendung der Pulse eines Bildaufnahmetakts und/oder zur Aussendung der Pulse eines Bildaufnahmetakts mit statistisch verteilter Pulsweite ausgebildet ist.

Bei einem Pulsfolgenbetrieb mit statistisch verteilter Aussendung der Pulse eines Bildaufnahmetakts wird die statistische Pulsfolge zweckmäßigerweise in jedem Bildaufnahmetakt jeweils neu festgelegt, so dass, selbst wenn in einem Bildtakt eine Blendung auftritt, der folgende Bildtakt mit einer hohen Wahrscheinlichkeit nicht von Blendung betroffen ist, wodurch sichergestellt ist, dass nicht über einen längeren Zeitraum keine verwertbaren Bilder der Szene erzeugt werden. Alle Einzelpulse eines Bildtakts ergeben die gesamte Belichtungszeit, die typischerweise bei etwa einer Millisekunde liegt. Die Zahl der Einzelpulse bleibt in aufeinanderfolgenden Bildtakten gleich. In einem Bildtakt, der eine Länge von 10 Millisekunden bis etwa 30 Millisekunden aufweist, werden Einzelpulse mit einer Pulsweite im Bereich von 100 Nanosekunden bis einer Mikrosekunde ausgesendet.

Bei einer Modulation der Pulsweiten der Einzelpulse bleibt die Summe aller Pulsweiten in einem Bildaufnahmetakt konstant. Auch bei der statistischen Pulsweitenmodulation ist wie bei der statistisch verteilten Pulsaussendung die Wirksamkeit der Blendungsreduzierung um so besser, je weiter die Einzelpulse zeitlich auseinanderliegen. So kann Blendung durch Fremdfahrzeuge mit Lichtquellen, die ebenfalls gepulst arbeiten, wirksam vermieden werden. Die Gefahr einer Blendung durch statische Lichtquellen oder Gleichlichtquellen ist sehr gering, da diese, gegebenenfalls bei einem ohnehin geringen Infrarotfrequenzanteil, mit im Bereich wenigstens einer Größenordnung geringeren Intensitäten arbeiten.

Vorteilhafterweise umfasst das erfindungsgemäße Nachtsichtsystem eine von der Datenverarbeitungseinrichtung gesteuerte Bildausgabeeinrichtung zur Darstellung aufgenommener Bilder, wobei die Datenverarbeitungseinrichtung bei erkannter Blendung zur Unterdrückung der Bilddarstellung ausgebildet ist. Dies ist neben der Verschiebung des Einsetzens der Pulsaussendung eine weitere Maßnahme, die aus einer erkannten Blendung hergeleitet werden kann. So wird verhindert, dass der Fahrer des Kraftfahrzeugs mit dem erfindungsgemäßen Nachsichtsystem eine Bildanzeige erhält, aus der kaum oder gar keine Informationen hergeleitet werden können, so dass der Fahrer nur unnötigerweise vom Verkehrsgeschehen abgelenkt wird. Da aufgrund der statistisch verteilten Aussendung der Pulsfolgen oder der Verschiebung des Einsatzpunktes für die Pulsaussendung die Wahrscheinlichkeit, dass das folgende Bild wiederum durch Blendung beeinträchtigt ist, gering ist, kann das Fehlen eines einzelnen Bildes in der Abfolge mit dem erfindungsgemäßen Nachtsichtsystem problemlos in Kauf genommen werden.

Die Datenverarbeitungseinrichtung kann bei der Blendungserkennung zur Bestimmung der von Blendung betroffenen Fläche eines Bildes und zum Vergleich der Größe dieser Fläche mit einem Schwellwert für die Flächengröße ausgebildet sein. In diesem Fall geht ein zweiter Schwellwert in die Analyse des aufgenommenen Bildes ein, mit dessen Hilfe überprüft werden kann, wie relevant ein erkannter Blendungseffekt tatsächlich ist. So kann, bevor beispielsweise eine Unterdrückung der Bilddarstellung erfolgt, festgestellt werden, ob dies im vorliegenden Fall erforderlich ist, da tatsächlich ein großer Bereich des Bildes von Blendung betroffen ist. Die Einstellung dieses Schwellwerts als Pixelanzahl oder Quadratzentimetergröße kann in Abhängigkeit von den Umfeldbedingungen, beispielsweise im Stadtverkehr im Unterschied zu einer Fahrt auf einer Landstraße, durch den Fahrer oder über die Einstellung unterschiedlicher Betriebsmodi erfolgen. Dabei wird zweckmäßigerweise auch die Lage der von Blendung betroffenen Fläche berücksichtigt, so dass je nach dem, ob das Fahrzeugvorfeld, das eingesehen werden soll, oder nur ein Randbereich des Bildes betroffen sind, beispielsweise die Pulsaussendung verschoben wird oder nicht.

Ist beispielsweise nur eine kleine Fläche von Blendung betroffen, die durch ein entgegenkommendes Fahrzeug mit einem aktiven Nachtsichtsystem hervorgerufen wird, so besteht noch kein Regelungsbedarf, die Pulsausendung muss nicht verschoben werden. Bei größeren oder großen Flächen hingegen, wenn das entgegenkommende Fahrzeug sich schon weiter genähert hat, so dass es schwierig wird, dem von Blendung betroffenen Bild die relevanten Informationen zu entnehmen, erfolgt eine Regelung. Die Pulsaussendung wird verschoben und die Darstellung des Bildes unterdrückt.

Insgesamt liegen mit der Berücksichtigung des Schwellwerts der Intensität und des Schwellwerts der Fläche zwei separate Kriterien vor, von denen die Auslösung von Maßnahmen wie der Verschiebung der Pulsaussendung abhängt.

Gemäß einer Weiterbildung der Erfindung ist vorgesehen, dass die Datenverarbeitungseinrichtung zur prädiktiven Blendungserkennung anhand des zeitlichen Verlaufs der Intensität bestimmter Bildbereiche in aufeinanderfolgenden Bildern ausgebildet ist. So kann beispielsweise anhand eines Bereichs hoher Intensität, der sich auf der Fahrbahn nähert, erkannt werden, dass sich ein Fahrzeug mit einer Fremdlichtquelle nähert, die in Kürze zu Blendeffekten auf den Aufnahmen des eigenen Nachtsichtssystems führen kann. So ist es möglich, noch bevor tatsächlich eine Blendung auftritt, zur Blendungsvermeidung die Pulsaussendung zu verschieben oder eine statistische Verteilung der Aussendung der Pulse zu aktivieren oder eine Pulsweitenmodulation vorzunehmen.

Weitere Vorteile, Merkmale und Einzelheiten der Erfindung ergeben sich aus dem im folgenden dargestellten Ausführungsbeispiel sowie anhand der Zeichnungen. Dabei zeigen:
- Fig. 1: eine Prinzipskizze eines erfindungsgemäßen Nachtsichtsystems in einem Kraftfahrzeug;
- Fig. 2: Die Regelung des Bildaufnahmebetriebs bei einem erfindungsgemäßen Nachtsichtsystem durch zeitverschobenes Aussenden des Lichtpulses;
- Fig. 3: den Effekt einer statistisch verteilten Aussendung der Pulse eines Bildaufnahmetakts bei einem Pulsfolgenbetrieb eines erfindungsgemäßen Nachtsichtsystems;
- Fig. 4: den Effekt einer Aussendung der Pulse eines Bildaufnahmetakts mit statistisch verteilter Pulsfolge bei einem Pulsfolgenbetrieb eines erfindungsgemäßen Nachtsichtsystems; und
- Fig. 5: eine Prinzipskizze zur Bestimmung der von Blendung betroffenen Fläche bei einem erfindungsgemäßen Nachtsichtsystem.

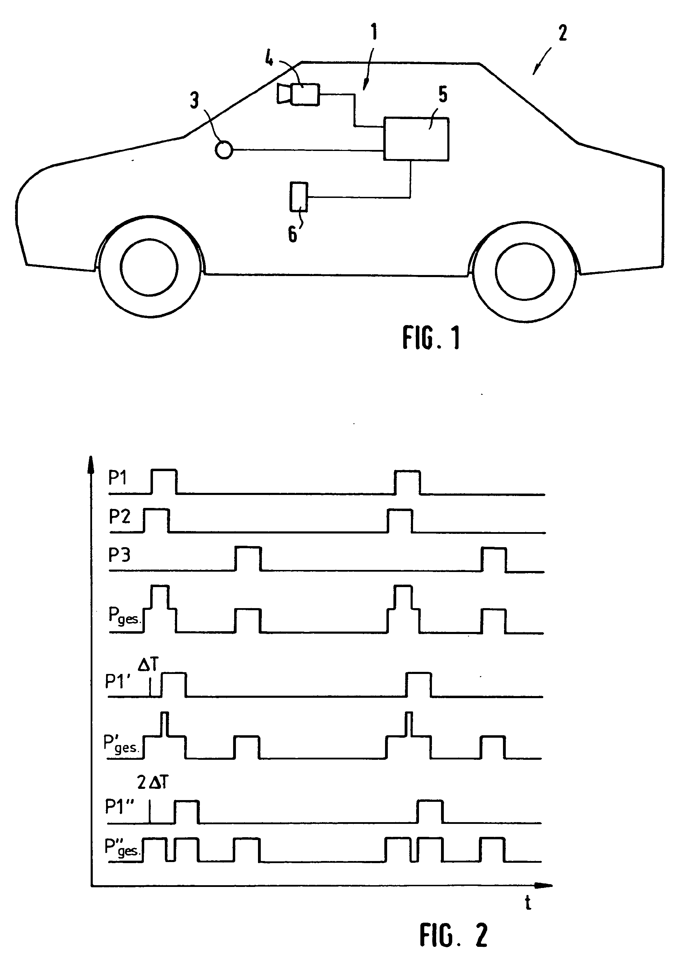

In Fig. 1 ist eine Prinzipskizze eines erfindungsgemäßen Nachtsichtsystems 1 in einem Kraftfahrzeug 2 dargestellt. Das Nachtsichtsystem 1 umfasst eine Nahinfrarot-Pulslichtquelle 3, die die Szene im Fahrzeugvorfeld im Einzelpulsmodus ausleuchtet. Die Aufhellung der Szene im Fahrzeugvorfeld durch die Nahinfrarot-Pulslichtquelle 3 führt bei der im Nahinfrarotbereich empfindlichen Bildaufnahmeeinrichtung 4 zu einer deutlich verbesserten Bildqualität mit hoher Detailauflösung. Die Bilder der Bildaufnahmeeinrichtung 4 werden an die Datenverarbeitungseinrichtung 5 weitergeleitet, die eine Analyse der Intensität der aufgenommenen Bilder vornimmt. Die Analyse der Datenverarbeitungseinrichtung 5 erfolgt in Abhängigkeit eines seitens der Datenverarbeitungseinrichtung 5 vorliegenden Schwellwerts der Intensität, der ein Maß für das Vorliegen von Blendung darstellt. Dieser Schwellwert hängt bevorzugt von der maximalen Intensität der Eigenstrahlung und damit von der maximal möglichen eingehenden Lichtmenge, nach Reflexion der Strahlung an den Gegenständen der Szene im Fahrzeugvorfeld, ab. Der Schwellwert der Intensität, der von der Datenverarbeitungseinrichtung 5 bei der Analyse verwendet wird, wird in Abhängigkeit von den Umfeldbedingungen oder Fahrerwünschen gegebenenfalls dynamisch angepasst.

Daneben verwendet das erfindungsgemäße Nachtsichtsystem 1 bei der Analyse einen zweiten Schwellwert, der von der von Blendung betroffenen Fläche des Bildes der Bildaufnahmeeinrichtung 4 abhängt. Wird eine Blendung erkannt, von der ein großer Bildbereich betroffen ist, wird die im Einzelpulsbetrieb betriebene Nahinfrarot-Pulslichtquelle 3 von der Datenverarbeitungseinrichtung 5 derart angesteuert, dass das Aussenden des Pulses im folgenden Bildaufnahmetakt zeitverschoben erfolgt. Das von starken Blendeffekten betroffene Bild wird nicht auf dem Display 6 dargestellt, sondern unterdrückt, dem Fahrer wird z.B. das zuvor aufgenommene, blendfreie Bild dargestellt.

Im folgenden Bildaufnahmetakt wird ein neues Bild seitens der mit der Nahinfrarot-Pulslichtquelle 3 synchronisierten Bildaufnahmeeinrichtung 4 aufgenommen, das danach wiederum in der Datenverarbeitungseinrichtung 5 analysiert wird. Liegt keine Blendung mehr vor, so erfolgt die Darstellung auf dem Display 6, besteht noch ein Blendeffekt, so kann die Nahinfrarot-Pulslichtquelle 3 wiederum angesteuert werden, um das Einsetzen des Pulses zu verschieben, wobei je nach Stärke des Blendeffekts seitens der Datenverarbeitungseinrichtung 5 in Abhängigkeit von Schwellwerten der Intensität beziehungsweise der von Blendung betroffenen Fläche des Bildes eine Displaydarstellung erfolgt oder nicht.

Fig. 2 stellt die Regelung des Bildaufnahmebetriebs bei einem erfindungsgemäßen Nachtsichtsystem durch zeitverschobenes Aussenden des Lichtpulses dar. Dargestellt sind die Pulsschemata von drei verschiedenen Nachtsichtsystemen, zunächst das Schema P1 des eigenen Nachtsichtsystems, weiterhin die Schemata P2 und P3 der Nachtsichtsysteme zweier entgegenkommender Fahrzeuge. Alle drei Nachtsichtsysteme arbeiten im Einzelpulsbetrieb, es wird also während der Belichtungsphase ein einzelner Puls ausgesendet, worauf eine längere Pause folgt. In der Überlagerung der drei Zeitschemata, P_{ges.}, zeigt sich eine Überlappung der Pulse des eigenen Fahrzeugs mit denen des entgegenkommenden Fahrzeugs, das mit dem Schema P2 sendet. Da die Belichtung der Kamera mit dem Aussenden des Pulses synchronisiert ist, werden in dem in den entsprechenden Zeitabschnitten aufgenommenen Bildern Blendeffekte auftreten.

Wenn die Analyse der Intensität des in dem entsprechenden Bildaufnahmetakt aufgenommenen Bildes ergibt, dass der eingestellte Schwellwert der Intensität überschritten ist, der in Abhängigkeit von der maximalen Eigenstrahlung festgelegt wird, beispielsweise in einem Bereich von 70 - 130 % der maximalen Eigenstrahlung, so kann eine Pulsverschiebung erfolgen. Daneben wird ein zweiter Schwellwert der von Blendung betroffenen Fläche berücksichtigt. Durch den zweiten Schwellwert wird ermittelt, wie relevant eine Blendung im Hinblick auf die gesamte Fläche des Bildes ist beziehungsweise wie stark der Informationsgehalt des Bildes durch die Blendung beeinträchtigt ist. Der Flächenschwellwert wird gegebenenfalls unter Berücksichtigung der Umfeldbedingungen festgelegt. Der Schwellwert der Intensität wird unter Berücksichtigung der Eigenschaften der Bildaufnahmeeinrichtung sowie des zu erwartenden Reflexionsgrads der Eigenstrahlung festgesetzt.

Aufgrund der erkannten Blendung erfolgt im folgenden Bildaufnahmetakt eine Pulsverschiebung um ΔT, hier eine halbe Pulsweite. Die Pulse des entgegenkommenden Fahrzeugs entsprechen dem Zeitschema P2 und werden unverändert ausgesandt und empfangen. Nach dieser Pulsverschiebung um ΔT ergibt die Überlagerung entsprechend dem Schema P'_{ges.} nur noch einen geringen Blendungseintrag durch das entgegenkommende Fahrzeug, das mit dem Zeitschema P2 aussendet. Das zugehörige Bild der Bildaufnahmeeinrichtung wird wiederum von der Datenverarbeitungseinrichtung analysiert, wobei der Intensitätsschwellwert immer noch überschritten ist, so dass eine Blendung erkannt wird. Hierbei wird auch die von Blendung betroffene Fläche des Bildes berücksichtigt. Aufgrund der Blendung erfolgt eine weitere Pulsverschiebung des ausgesandten eigenen Lichtpulses, wiederum um ΔT. Diese Pulsverschiebung ist nun ausreichend, so dass das Gesamtsignal aller relevanten Pulsschemata, P"_{ges.}, nun für die Belichtungszeit des eigenen Nachtsichtsystems keine Blendung mehr aufweist. Die Blendung wurde zuverlässig erkannt und das Einsetzen des eigenen Pulses so lange verschoben, bis keine Blendeffekte mehr auftraten.

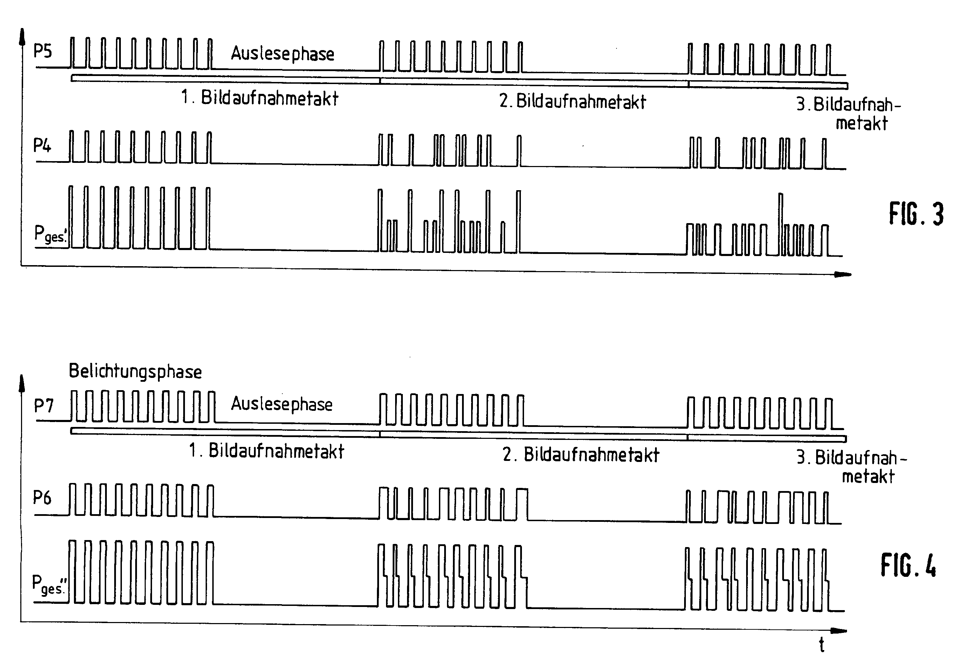

Fig. 3 zeigt den Effekt einer statistisch verteilten Aussendung der Pulse eines Bildaufnahmetakts bei einem Pulsfolgebetrieb eines erfindungsgemäßen Nachtsichtsystems. Dargestellt ist das Zeitschema P5 der lmpulsaussendung des Nachtsichtsystems eines entgegenkommenden Fahrzeugs bei dem in einem Bildaufnahmetakt mehrere Einzelpulse, mit gleichen Abständen, ausgesendet werden. Der Belichtungsphase mit einer aufsummierten Pulsweite von etwa einer Millisekunde folgt die ungefähr gleichlange Auslesephase. Das Nachtsichtsystem des eigenen Fahrzeugs sendet im Zeitschema P4, zunächst ebenfalls mit äquidistanten Pulsen im ersten Bildaufnahmetakt. Das Zeitschema P_{ges}.' zeigt die Überlagerung der Schemata P5 und P4, wobei durch das Zusammenfallen der Einzelpulse der jeweiligen Pulsfolgen Pulse hoher Intensität auftreten, die somit zu einer starken Blendung führen. Eine Analyse des entsprechenden mit der Bildaufnahmeeinrichtung aufgenommenen Bildes ergibt das Überschreiten des zugehörigen Schwellwerts der Intensität und gegebenenfalls eines Flächenschwellwerts für die von Blendung betroffene Fläche des Bildes, woraufhin die Datenverarbeitungseinrichtung des Nachtsichtsystems die Nahinfrarot-Pulslichtquelle derart ansteuert, dass die Pulse einer Pulsfolge statistisch verteilt ausgesendet werden.

Ein Beispiel für eine statistisch verteilte Aussendung ist im Zeitschema P4 des eigenen Systems für den zweiten Bildaufnahmetakt dargestellt. Das Nachtsichtsystem des entgegenkommenden Fahrzeugs, entsprechend dem Zeitschema P5, sendet weiterhin äquidistante Pulse aus. Im zweiten Bildaufnahmetakt ist im resultierenden Zeitschema P_{ges.}, eine Verringerung der Blendung erkennbar, da deutlich weniger Einzelpulse der Nachtsichtsysteme der beiden Fahrzeuge überlappen. Es treten weniger Peaks der Intensität auf.

Im dritten Bildaufnahmetakt sendet die Nahinfrarot-Pulslichtquelle des eigenen Fahrzeugs mit einer neuen statistischen Verteilung, so dass sich auch in der Überlagerung ein neues Signal ergibt, wie im Zeitschema P_{ges.}, dargestellt. Hier hat sich die Blendung weiter reduziert, nur noch ein einziger Peak der zu einer Intensität gehört, die über der maximalen Eigenstrahlung des eigenen Nachtsichtsystems liegt, tritt auf.

Bei der statistischen Verteilung der Aussendung der Einzelpulse ist somit die Wahrscheinlichkeit einer Blendung deutlich verringert, wobei dennoch in einzelnen Bildern Blendeffekte auftreten können, die jedoch im Rahmen der Analyse der Datenverarbeitungseinrichtung erkannt werden, woraufhin bei einer starken Blendung die Darstellung des entsprechenden Bildes auf der Bildausgabeeinrichtung unterdrückt werden kann.

In Fig. 4 ist der Effekt einer Aussendung der Pulse eines Bildaufnahmetakts mit statistisch verteilter Pulsweite bei Pulsfolgenbetrieb eines erfindungsgemäßen Nachtsichtsystems dargestellt. Das Zeitschema P7 entspricht den Signalen, die das Nachtsichtsystem eines entgegenkommenden Fahrzeugs aussendet. Dieses Nachtsichtsystem arbeitet im dargestellten Fall im Pulsfolgenbetrieb, wobei die Pulse äquidistant sind.

Werden die Pulse des eigenen Nachtsichtsystems ebenfalls äquidistant ausgesendet, wie im ersten Bildaufnahmetakt im Zeitschema P6 gezeigt, so überlappen die Einzelpulse zu einem Signal, das im Gesamtzeitschema P_{ges.}" dargestellt ist. Es tritt eine starke Blendung in Folge von Einzelpulsen mit einer Höhe, die etwa der doppelten Intensität der Eigenstrahlung entspricht, auf.

Im folgenden Bildaufnahmetakt ist eine statistische Modulation der Pulsweite der Pulse der eigenen Nahinfrarot-Pulssichtquelle dargestellt. Werden die Pulsweiten der Einzelpulse aufaddiert, so ergibt sich eine konstante Gesamtpulsweite, damit sich die Belichtungsverhältnisse für die einzelnen Bilder nicht ändern. Im Ergebnis reduziert sich durch die Modulation der Pulsweite der Anteil der Zeitabschnitte, bei denen Blendung während der Belichtungszeit auftritt.

Im dritten Bildaufnahmetakt erfolgt schließlich die Pulsweitenmodulation mit einer neuen statistischen Verteilung, so dass wiederum ein anderes Überlagerungssignal auftritt. Die Wirksamkeit der statistischen Pulsweitenmodulation ist umso besser, je weiter die Einzelpulse zeitlich auseinanderliegen.

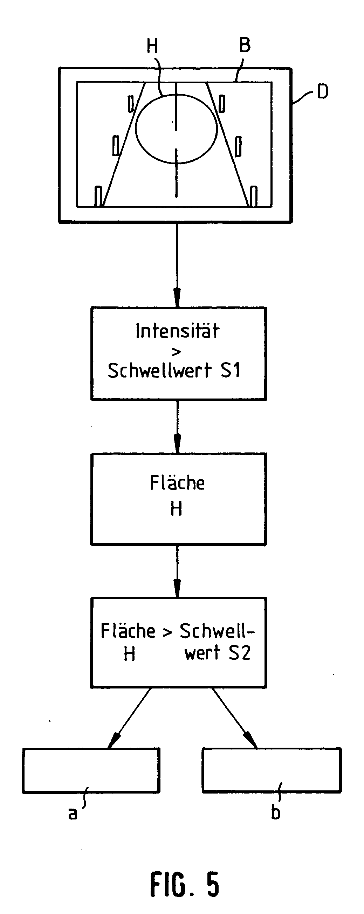

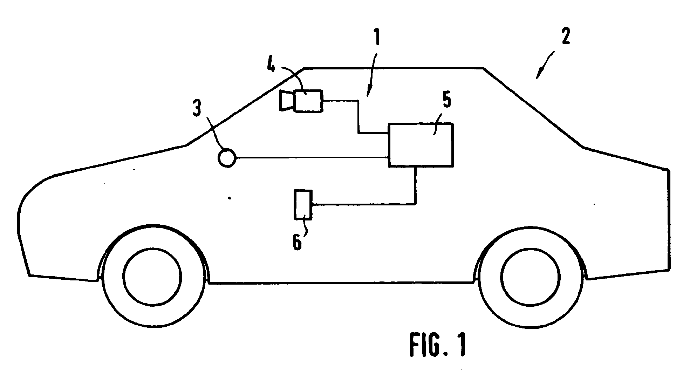

Fig. 5 zeigt eine Prinzipskizze zur Bestimmung der von Blendung betroffenen Fläche bei einem erfindungsgemäßen Nachtsichtsystem. Das Bild B, das mit der Bildaufnahmeeinrichtung des Nachtsichtsystems gemäß der Erfindung aufgenommen wurde, wird in der Datenverarbeitungseinrichtung D analysiert. Das Bild B weist im dargestellten Fall einen hellen Bereich H auf. Die Datenverarbeitungseinrichtung D analysiert die Intensität des Bildes B pixelweise, insbesondere im Bereich bestimmter "Regions of Interest", die zweckmäßigerweise im Fahrzeugvorfeld auf der Fahrbahn ausgewählt werden.

Überschreitet die Intensität des hellen Bereichs H einen vorher festgelegten Schwellwert der Intensität S1, der in Abhängigkeit von den Umfeldbedingungen dynamisch angepasst werden kann, so wird seitens der Datenverarbeitungseinrichtung Blendung erkannt. Die Datenverarbeitungseinrichtung D ist zur Bestimmung der von Blendung betroffenen Fläche H des Bildes B ausgebildet, wobei diese Fläche zweckmäßigerweise in Pixeln im Verhältnis zur Gesamtpixelzahl des Bildes B ausgedrückt wird.

In der Datenverarbeitungseinrichtung D ist weiterhin ein Schwellwert S2 abgelegt, der ein Schwellwert für die Flächengröße ist. Überschreitet die Größe der Fläche H diesen Schwellwert S2, so tritt der Fall a auf. Die Blendung wird als relevant erkannt, die Ausgabe des Bildes auf einer Bildausgabeeinrichtung des Nachtsichtsystems wird unterdrückt, um den Fahrer nicht durch schwer interpretierbare Bilder mit Blendeffekten vom Fahrgeschehen abzulenken. Die Aussendung der Pulse wird gegebenenfalls verschoben oder auf statistische Aussendung umgestellt. Wird der Schwellwert nicht überschritten, so liegt der Fall b vor; die Blendung betrifft nur einen kleinen Bereich der Fläche des Bildes B, so dass seitens der Datenverarbeitungseinrichtung keine Maßnahmen erforderlich sind. Das Bild wird dargestellt, die Ansteuerung der Nahinfrarot-Pulslichtquelle wird nicht verändert.

Durch die Kombination mit dem Flächenschwellwert wird die Analyse zur Erkennung der Blendung, die die Datenverarbeitungseinrichtung leistet, weiter verbessert. Es wird nicht nur prinzipiell erkannt, ob eine Blendung in ausgewählten Bildbereichen vorliegt, sondern diese Blendung wird im Hinblick auf ihre Relevanz, die sich in der Größe des von Blendung betroffenen Bildbereichs des Bildes B ausdrückt, klassifiziert.

## Patentansprüche

1. Nachtsichtsystem für ein Kraftfahrzeug, umfassend wenigstens eine Nahinfrarot-Pulslichtquelle, wenigstens eine Bildaufnahmeeinrichtung, deren Belichtungszeit mit dem ausgesandten Lichtpuls der Pulslichtquelle synchronisiert ist, und eine Datenverarbeitungseinrichtung,
**dadurch gekennzeichnet,**
**dass** die Datenverarbeitungseinrichtung (5, D) zur Erkennung von Blendung durch Fremdlichtquellen mittels Analyse der Intensität wenigstens eines mit der Bildaufnahmeeinrichtung (4) aufgenommenen Bildes (B) in Abhängigkeit eines ein Maß für das Vorliegen von Blendung darstellenden Schwellwerts (S1) der Intensität ausgebildet ist.

2. Nachtsichtsystem nach Anspruch 1,
**dadurch gekennzeichnet,**
**dass** die Datenverarbeitungseinrichtung (5, D) zur Analyse der Intensität in Abhängigkeit eines von der maximalen Eigenstrahlung der Pulslichtquelle abhängigen Schwellwerts (S1) ausgebildet ist.

3. Nachtsichtsystem nach einem der vorangehenden Ansprüche,
**dadurch gekennzeichnet,**
**dass** die Datenverarbeitungseinrichtung (5, D) zur pixelweisen Analyse der Intensität des Bildes (B), insbesondere durch Analyse der Intensität ausgewählter Bildbereiche, ausgebildet ist.

4. Nachtsichtsystem nach einem der vorangehenden Ansprüche,
**dadurch gekennzeichnet,**
**dass** die Pulslichtquelle (3) zum Betrieb in einem Einzelpulsmodus, in dem in jedem Bildaufnahmetakt ein einziger Lichtpuls ausgesandt wird, und/oder zum Betrieb in einem Pulsfolgenmodus, in dem in jedem Bildaufnahmetakt eine Folge von kurzen Einzelpulsen ausgesandt wird, ausgebildet ist.

5. Nachtsichtsystem nach Anspruch 4,
**dadurch gekennzeichnet,**
**dass** die Datenverarbeitungseinrichtung (5, D) bei einem Einzelpulsbetrieb der Pulslichtquelle (3) und/oder bei einem Pulsfolgenbetrieb mit äquidistanten Einzelpulsen zur Regelung des Bildaufnahmebetriebs derart ausgebildet ist, dass bei erkannter Blendung das Aussenden des Lichtpulses oder der Pulsfolge im folgenden Bildaufnahmetakt zeitverschoben erfolgt.

6. Nachtsichtsystem nach Anspruch 5,
**dadurch gekennzeichnet,**
**dass** die Zeitverschiebung im Bereich einer Pulsweite oder Pulsfolgenweite liegt, insbesondere bei einer halben Pulsweite oder Pulsfolgenweite.

7. Nachtsichtsystem nach Anspruch 4,
**dadurch gekennzeichnet,**
**dass** die Pulslichtquelle (3) bei einem Pulsfolgenbetrieb zur statistisch verteilten Aussendung der Pulse eines Bildaufnahmetakts und/oder zur Aussendung der Pulse eines Bildaufnahmetakts mit statistisch verteilter Pulsweite ausgebildet ist.

8. Nachsichtsystem nach einem der vorangehenden Ansprüche,
**dadurch gekennzeichnet,**
**dass** das Nachtsichtsystem (1) eine von der Datenverarbeitungseinrichtung (5, D) gesteuerte Bildausgabeeinrichtung zur Darstellung aufgenommener Bilder umfasst, wobei die Datenverarbeitungseinrichtung bei erkannter Blendung zur Unterdrückung der Bilddarstellung ausgebildet ist.

9. Nachtsichtsystem nach einem der vorangehenden Ansprüche,
**dadurch gekennzeichnet,**
**dass** die Datenverarbeitungseinrichtung (5, D) bei der Blendungserkennung zur Bestimmung der von Blendung betroffenen Fläche eines Bildes und zum Vergleich der Größe dieser Fläche mit einem Schwellwert (S2) für die Flächengröße ausgebildet ist.

10. Nachtsichtsystem nach einem der vorangehenden Ansprüche,
**dadurch gekennzeichnet,**
**dass** die Datenverarbeitungseinrichtung (5, D) zur prädiktiven Blendungserkennung anhand des zeitlichen Verlaufs der Intensität bestimmter Bildbereiche in aufeinanderfolgenden Bildern ausgebildet ist.
